# EUROPÄISCHE PATENTSCHRIFT

(11) **EP 1 408 738 B1**
(45) Veröffentlichungstag und Bekanntmachung des Hinweises auf die Patenterteilung: **06.07.2005**
(21) Anmeldenummer: 02751146.8
(22) Anmeldetag: 17.07.2002
(51) Int. Cl.: A01J 7/02

(54) **MELKVORRICHTUNG UND EIN VERFAHREN ZUM BETRIEB DERSELBEN**
MILKING DEVICE AND METHOD FOR OPERATING THE SAME
DISPOSITIF TRAYEUR ET UN PROCEDE DE FONCTIONNEMENT DUDIT DISPOSITIF

(30) Priorität: 20.07.2001 DE 10135447
(43) Veröffentlichungstag der Anmeldung: 21.04.2004
(73) Patentinhaber: WestfaliaSurge GmbH, 59302 Oelde (DE)
(72) Erfinder: SCHULZE-WARTENHORST, Bernhard, 48231 Warendorf (DE)
(74) Vertreter: Grünecker, Kinkeldey, Stockmair & Schwanhäusser Anwaltssozietät
(86) Internationale Anmeldenummer: PCT/EP2002/007970
(87) Internationale Veröffentlichungsnummer: WO 2003/009675

(56) Entgegenhaltungen:
- WO-A-01/32004
- DE-A- 19 802 887
- GB-A- 1 035 004
- US-A- 3 629 005
- US-A- 3 688 783

## Beschreibung

Die vorliegende Erfindung betrifft eine Melkvorrichtung mit mindestens einem Melkbecher, der einen inneren Raum zur Aufnahme der Zitze eines zu melkenden Tieres durch eine Öffnung des Melkbechers sowie einen von dem Innenraum durch ein Zitzengummi getrennten Pulsraum aufweist, der mit einer Unterdruckquelle verbindbar ist.

Beim Melken von Tieren kommen üblicherweise Melkbecher zum Einsatz, welche einen Innenraum zur Aufnahme der Zitze eines zu melkenden Tieres aufweisen, der umfänglich von einem Zitzengummi umgeben ist. Als Zitzengummi wird eine Membran bezeichnet, die aus einem elastischen Material gebildet ist. Dieses muss nicht zwangsläufig Gummi sein. Das Zitzengummi trennt den Innenraum von einem Pulsraum, welcher umfänglich von dem Melkbechergehäuse umgeben ist. Der Pulsraum kommuniziert regelmäßig über Schläuche mit einer Unterdruckquelle. Beim Ermelken von Milch wird in dem Pulsraum in der sogenannten Saugphase zunächst ein Unterdruck erzeugt, der nachfolgend in der sogenannten Entlastungsphase vermindert wird. In dieser Entlastungsphase kollabiert das in der Saugphase radial nach außen gezogene Zitzengummi. Ein Pulszyklus umfasst eine Saug- und eine Entlastungsphase. Die ermolkene Milch wird über eine mit dem Innenraum kommunizierende Milchleitung abgezogen. Über diese Milchleitung wird in dem Innenraum unterhalb der Zitze regelmäßig ein Unterdruck erzeugt, durch welchen ermolkene Milch aus dem Melkbecher abgesogen wird.

Das Druckprofil sowie der absolute Druck während des Pulszyklus in dem Pulsraum werden gesteuert. Üblicherweise weist hierzu jedes Melkzeug, welches Melkbecher in einer der Anzahl der Zitzen des zu melkenden Tieres aufweist, einen Pulsator auf. Mit dem eingestellten Druckdifferenzprofil, d.h. der Druckdifferenz zwischen dem Innenraum und dem Pulsraum und der zeitlichen Abfolge dieser Druckdifferenz wird die Abgabe von Milch beim Melken eines Tieres stimuliert. Zunächst kann in einer sogenannten Anrüstphase eine spezifische Bewegung des Zitzengummis aufgeprägt werden, welche die Bereitschaft zur Milchabgabe bei dem Tier erhöht. Danach folgt die Einstellung eines sich zeitlich ändernden zyklisch wiederkehrenden Druckprofils zum Abziehen der Milch. Die Einstellung erfolgt jeweils im Hinblick auf die gewünschte Bewegung des Zitzengummis. In der Entlastungsphase drückt dieses insbesondere umfänglich gegen die Zitze, wohin gegen in der Saugphase die Zitze in Umfangsrichtung gedehnt wird.

Mit zunehmender Automatisierung und dem verstärkten Einsatz von Fremdarbeitskräften sowie beim Melken, insbesondere von Kühen mit automatischen Melkverfahren ohne menschliche Kontrolle, steigt der Wunsch nach automatischer Kontrolle der wichtigsten Funktionen in einer Melkanlage. Zu diesen wichtigen Funktionen gehören u. a. auch die Druckbedingungen in dem Zitzenbecher, insbesondere der von dem Zitzengummi auf die Zitze wirkende Radialdruck.

In dem Bemühen nach einer möglichst automatischen Kontrolle der wichtigsten Funktionen ist es zunächst naheliegend, die Steuersignale in dem Pulsator zu überwachen, um hierdurch Rückschlüsse auf die Druckverhältnisse in dem Zitzenbecher zu ermöglichen. Eine derartige Kontrolle gibt jedoch ausschließlich die elektrischen Steuersignale wieder, nicht aber die tatsächlichen Druckbedingungen im Zitzenbecher. In dem Zitzenbecher eingebaute Drucksensoren lassen ebenfalls nur mittelbar einen Schluss auf die Bewegung des Zitzengummis zu, was zu Fehlbeurteilungen der tatsächlichen Bewegung des Zitzengummis führen kann. Insbesondere Alterungsprozesse an dem Zitzengummi können dazu führen, dass einmal als richtig eingestellte Druck-Sollwerte nicht mehr erreicht werden. Ein derartiges Verhalten kann jedoch anhand der gemessenen Druckwerte in den einzelnen Druckräumen nicht oder nur unzureichend festgestellt werden. Auch besteht das Problem der Beeinträchtigung bzw. Beschädigung der empfindlichen Drucksensoren unter den rauen Bedingungen in der Praxis.

Aus der DE-A-198 02 887 ist eine Messeinrichtung bekannt, die durch die Öffnung in den Innenraum eines Melkbechers einführbar ist. Diese Messeinrichtung weist eine der Geometrie der Zitze nachgebildete "Messzitze" auf, weiche an ihrer Umfangsfläche zur räumlichen Auflösung eines Drucksignals auf die "Messzitze" auf einen Grundkörper aufgebrachte Folienplatinen hat. Diese sind mit einer Schaumstoffschicht bedeckt und mit einer Schutzschicht überzogen. Die vorbekannte Messeinrichtung ist verhältnismäßig aufwendig im Aufbau und muss in regelmäßigen Abständen zur Überprüfung der Melkvorrichtung zum Einsatz gebracht werden. Diese zeitlichen Abstände müssen von dem geschulten Bedienpersonal festgelegt und überwacht werden.

Der vorliegenden Erfindung liegt das Problem zugrunde, eine Vorrichtung und ein Verfahren zur Überprüfung des Zitzengummiverhaltens mit verbesserter Zuverlässigkeit anzugeben.

Zur Lösung des obigen Problems wird mit der vorliegenden Erfindung eine Reinigungs- und/oder Desinfektionseinrichtung mit wenigstens einem Dom, der wenigstens eine durch die Öffnung an dem Innenraum anschließbare Auslassöffnung für Fluid, insbesondere eine Reinigungs- und/oder Desinfektionslösung aufweist, sowie mit einer dem Dorn zugeordneten Einrichtung zum Überprüfen des Zitzengummiverhaltens vorgeschlagen.

Bei der erfindungsgemäßen Vorrichtung ist die Einrichtung zum Überprüfen des Zitzengummiverhaltens Bestandteil der Reinigungs- bzw. des Desinfektionseinrichtung. Dementsprechend führt ein Reinigen des Innenraumes zwangsläufig auch zu einer Überprüfung des Zitzengummiverhaltens. Mit anderen Worten wird bei jeder Reinigung des Melkbechers auch die Qualität des Zitzengummis überwacht. Die erfindungsgemäße Vorrichtung ist vorzugsweise stationär einem Melkplatz eines Melkstandes zugeordnet. Hier werden die zu melkenden Tiere einer Herde vorbeigeführt und nacheinander gemolken. Nach jedem Melken wird jeder Melkbecher sowohl gereinigt als auch auf die Qualität des Zitzengummis hin überprüft.

So kann bei einem automatischen Melken, bei dem üblicherweise eine Kuh über ein Melkzeug tritt, welches dann an das Euter angelegt wird, nach jedem einzelnen Melkvorgang einer einzelnen Kuh das Melkzeug gereinigt und die Qualität des Zitzengummis jedes einzelnen Bechers überprüft werden. Bei anderen Meikaniagentypen kann das Zitzengummiverhalten nach dem Melken der gesamten Herde überprüft werden. Zu solchen Melkanlagentypen gehören üblicherweise halbautomatisch oder rein manuell betriebene Melkanlagen, bei denen das Melkzeug zumindest manuell angesetzt wird. Nach dem Melken einer Kuh wird hier der Innenraum zumindest mit Wasser durchspült. Es ist aber bei beiden Anlagentypen nicht erforderlich, gewisse Überprüfungs- und Wartungsintervalle festzulegen und zu überwachen. Auch kann auf ein gesondertes Gerät, welches der Überprüfung des Zitzengummiverhaltens dient, verzichtet werden. Die erfindungsgemäße Vorrichtung ist danach einfacher im Aufbau und führt aufgrund der zwangsläufigen Überprüfung des Zitzengummis nach jedem Melken eines Tieres zu einer zuverlässigen Detektion von Fehlern. Ein fehlerhafter Melkbecher bzw. eine Fehlfunktion eines Pulsators wird beim Wechsel der Melkbecher von einem Tier zu dem nächsten erkannt, so dass die zu melkenden Tiere einer Herde schonender gemolken werden.

Vorzugsweise weist der Dorn einen Druckmesssensor auf, der den in dem Innenraum wirkenden absoluten Druck misst. In Kombination mit einer derartigen bevorzugten Weiterbildung hat der Dorn vorzugsweise eine Dichtfläche zur dichtenden Anlage gegen das Zitzengummi. Bei einer derartigen Weiterbildung muss der Dorn lediglich derart ausgebildet sein, dass er das Zitzengummi im Öffnungsbereich des Melkbechers umfänglich abdichtet und dabei der Druckmesssensor mit dem Innenraum kommuniziert.

Das Zitzengummiverhalten kann bei dieser bevorzugten Ausbildung beispielsweise dadurch gemessen werden, dass der Innenraum zunächst mit Reinigungsflüssigkeit gefüllt wird. Bei einem sich ändernden Druckdifferenzprofil beiderseits des Zitzengummis erfolgt dann die zu messende Lageänderung des Zitzengummis, die beispielsweise zu einem Ansaugen oder Ausfördem der Reinigungsflüssigkeit führen kann. Ein in dem Dorn angeordneter, einer Auslassöffnung zugeordneter Durchflussmesser kann zusammen mit dem Druckmesssensor Daten an die Auswerteeinrichtung weiterleiten, die zur Bestimmung des Zitzengummiverhaltens weiterverarbeitet werden.

Im Hinblick auf eine möglichst gute Reinigung des Innenraumes ist es weiterhin zu bevorzugen, den Druckmessfühler bei an dem Innenraum angeschlossenen Dorn berührungsfrei zu dem Zitzengummi anzuordnen. Der Druckmessfühler kann beispielsweise auf der Oberfläche eines mit dem Innenraum kommunizierenden, jedoch nicht vollständig in den innenraum eingeschobenen Messdomes vorgesehen sein.

Bei einer alternativen Ausgestaltung ist der Dorn als eine die Zitzengummigeometrie zumindest umfänglich nachbildende Druckmesssonde ausgebildet, die einen auf die äußere Umfangsfläche der Druckmesssonde wirkenden, durch das Zitzengummi aufgebrachten Kontaktdruck erfasst. Mit einer derartigen Messsonde werden mit hoher Genauigkeit eben jene absoluten Verhältnisse und insbesondere Drücke ermittelt, welche tatsächlich auf eine in dem Innenraum aufgenommene Zitze repräsentativer geometrischer Abmessungen wirken. Vorzugsweise kann hierbei der Druckmesssensor als Berührungssensor an der äußeren Umfangsfläche der Druckmesssonde angeordnet sein. Alternativ wird bei einer weiteren bevorzugten Ausbildung der erfindungsgemäßen Melkvorrichtung an der äußeren .Umfangsfläche der Druckmesssonde eine Membran angeordnet, die eine mit einem Fluid gefüllte Druckmesskammer abdeckt, weiche mit dem Drucksensor kommuniziert. Diese bevorzugte Weiterbildung hat den Vorteil, dass der von dem Zitzengummi aufgebrachte Druck umfänglich als hydrostatischer Druck ermittelt wird. Eventuelle Lageabweichungen der Druckmesssonde führen daher kaum zu verfälschten Messergebnissen. Auch eignet sich diese bevorzugte Weiterbildung zur genauen Messung von Drücken, welche in der Saugphase durch eine radiale Bewegung des Zitzengummis nach außen auf die Zitze eines zu melkenden Tieres wirken.

Bei einer bevorzugten Weiterbildung weist der Dorn mindest einen Temperaturmessfühler auf. Hierdurch ist die Möglichkeit gegeben, Veränderungen des Zitzengummiverhaltens, die temperaturbedingt sind, entweder durch einheitliche Temperaturbedingungen bei sämtlichen Messungen auszublenden oder aber Temperaturdifferenzen zu ermitteln und diese bei der Beurteilung des Zitzengummiverhaltens in der Auswerteeinrichtung zu berücksichtigen. Darüber hinaus kann mit dem Temperaturfühler die Temperatur eines in den Innenraum eingeleiteten Fluides überwacht und gesteuert werden. Es hat sich herausgestellt, das temperaturbedingte Einflüsse auf das Zitzengummiverhalten nicht mit hinreichender Genauigkeit über Berechnungen zur Temperaturkorrektur ausgeglichen werden können, sondern vielmehr dazu übergegangen werden muss, das Zitzengummi bei der Überprüfung auf eine einheitliche, vorbestimmte und genau eingestellte Temperatur zu bringen. Der Temperaturmessfühler erlaubt eine Überprüfung der tatsächlichen Temperatur eines Fluides in dem Innenraum.

Hinsichtlich des Verfahrens wird mit der vorliegenden Erfindung vorgeschlagen, das Verhalten des Zitzengummis bei einem zwischen dem Pulsraum und dem Innenraum wirkenden Druckdifferenzprofil während einer Reinigungs- und/oder Desinfektionsphase zu ermitteln. Bei dem erfindungsgemäßen Verfahren wird das Zitzengummiverhalten als integraler Bestandteil einer Reinigungs- bzw. Desinfektionsphase durchgeführt. Mit anderen Worten ist die Durchführung eines gesonderten Überprüfungsschrittes zur Sicherstellung einer gleichbleibenden Qualität beim Melken nicht erforderlich.

Vorzugsweise wird die Bewegung des Zitzengummis unter praktischen Bedingungen ermittelt, d.h. der absolute Druck in dem Innenraum wird unter Beibehaltung eines beim Ermelken von Milch in dem Innenraum wirksamen Innenraumdruckes gemessen. Die über das Zitzengummi wirkende Druckdifferenz entspricht bei dieser Verfahrensführung genau derjenigen Druckdifferenz in ihrem zeitlichen Verlauf, die sich auch zunächst in der Saugphase und schließlich in der Entlastungsphase beim Ermelken von Milch einstellt.

Bei einer weiteren bevorzugten Ausgestaltung der vorliegenden Erfindung wird das Druckdifferenzprofil in Übereinstimmung mit dem beim Melken wirkenden Druckdifferenzprofil eingestellt. Bei dieser bevorzugten Weiterbildung erfolgt danach die Überprüfung des Zitzengummiverhaltens bei genau denjenigen Druckbedingungen, die auch beim Ermelken von Milch wirken. Zur Einstellung des Druckdifferenzprofils kann auf einfache Weise das bereits zum Melken eingerichtete Druckprofil einerseits in dem Pulsraum und andererseits in dem Innenraum abgefahren werden. Damit lässt sich bei dem erfindungsgemäßen Verfahren nicht nur die Bewegung des Zitzengummis unter Testbedingungen feststellen, sondern es können genau diejenigen Radialdrücke ermittelt werden, mit denen das Melkzeug in der Praxis auf die Zitze einwirkt.

Bei einer weiteren bevorzugten Ausgestaltung der vorliegenden Erfindung wird der in dem Innenraum wirksame absolute Druck gemessen. Bei dieser bevorzugten Verfahrensführung können solche Unregelmäßigkeiten der Bewegung des Zitzengummis detektiert werden, die aus einer Überlagerung des Druckes in dem Pulsraum mit einem nicht genau festgestellten Druck in dem Innenraum resultieren.

Vorzugsweise werden die Zitzengummis mehrerer Melkbecher zeitgleich überprüft, wobei das Fehlverhalten mehrerer der überprüften Zitzengummi ein Signal erzeugt, welches einen Melkanlagenfehler angibt. Bei einem derartigen Messergebnis muss nämlich davon ausgegangen werden, das nicht die zeitgleich überprüften Zitzengummis der Melkbecher ein Fehlverhalten zeigen. Vielmehr deutet ein derartiges Messergebnis daraufhin, dass ein Fehler in der Melkanlage selbst besteht, beispielsweise ein Fehler in der Druckquelle und/oder zugeordneter Ventile im Pulsator für den Druck im Innenraum und/oder für den Druck im Pulsraum. Mit steigender Anzahl an zeitgleich überprüften Melkbechern steigt die Zuverlässigkeit der Aussage auf einen Melkanlagenfehler.

Das Signal wird vorzugsweise als optisches und/oder akustisches Signal unmittelbar an dem Melkplatz angegeben, d.h. derjenigen Stelle der Melkanlage, wo das entsprechende Melkzeug zum Einsatz kommt. Das optische und/oder akustische Signal führt unmittelbar zu einer Wahmehmung der Fehlfunktion bei dem Benutzer der Melkanlage.

Bei einer bevorzugten Weiterbildung des erfindungsgemäßen Verfahrens werden sämtliche Daten, welche das Verhalten des Zitzengummis repräsentieren, an eine Auswerteeinrichtung weitergeleitet. Zu diesen Daten gehören nicht nur diejenigen Daten, welche die Bewegung bzw. das Reaktionsverhalten des Zitzengummis auf ein Druckdifferenzprofil wiedergeben. Vielmehr werden auch solche Daten an die Auswerteeinrichtung weitergeleitet, welche insbesondere das Druckdifferenzprofil beiderseits des Zitzengummis repräsentieren. In der Auswerteeinrichtung werden diese Daten mit Referenzdaten verglichen.

Festgestellte Fehlfunktionen, die angezeigt werden, wenn das ausgewertete Verhalten des Zitzengummis außerhalb eines vorgegebenen Toleranzbereiches liegt, werden bei einer bevorzugten Weiterbildung des erfindungsgemäßen Verfahrens an einem Melkplatzterminal angezeigt. Das Melkplatzterminal dient regelmäßig der Einstellung der Melkbedingungen an dem Melkplatz und verfügt über eine Anzeigeeinrichtung, an der sich auch die Fehlfunktion anzeigen und weiter analysieren lässt. So kann ein die Fehlfunktion eines einzelnen Melkbechers innerhalb eines Melkzeuges angebendes Signal von den entsprechenden Signalen der anderen Melkbecher des Melkzeuges unterscheidbar sein, um möglichst rasch das fehlerhafte Teil zu erkennen und auszutauschen.

Bei einer besonders zu bevorzugenden Ausgestaltung gemäß Anspruch 18 wird in dem Innenraum eine vorbestimmte Temperatur eingestellt. Temperaturunterschiede, die sich regelmäßig beim Betrieb einer Melkanlage jahreszeitenbedingt einstellen und welche das Verhalten des Zitzengummis beeinflussen, können somit bei der Überprüfung des Zitzengummis ausgeschlossen werden. Besonders bevorzugt wird zur Temperierung des Zitzengummis ein Fluid in den Innenraum eingeleitet. Aufgrund dieser Maßnahme kann eine vorbestimmte Temperatur mit großer Zuverlässigkeit gleichmäßig in dem gesamten Zitzengummi erzeugt werden. Bei dieser Verfahrensführung wird beispielsweise ein die Druckmesssonde umfassender Körper in den. Innenraum eingebracht, weicher auch Austrittsöffnungen für das Reinigungs- und/oder Desinfektionsfluid enthält. Das Fluid ist vorzugsweise temperiert, um temperaturbedingte Einflüsse auf das Zitzengummiverhalten zu eliminieren. Während der Überprüfung des Zitzengummis wird die Strömung des Fluids vorzugsweise unterbrochen und in dem Innenraum ein hydrostatischer Druck eingestellt. Hierdurch wird die Genauigkeit der Messung erhöht.

Bei einer besonders bevorzugten Weiterbildung wird vorgeschlagen, zunächst über eine vorbestimmte Zeit mehrere Pulszyklen zu durchlaufen, danach temperiertes Fluid in den Innenraum einzuleiten und schließlich das Verhalten des Zitzengummis zu überprüfen. Es hat sich herausgestellt, dass bei Einhaltung der ersten beiden Schritte die Randbedingungen bei jeder Überprüfung des Zitzengummiverhaltens konstant gehalten werden können. So wird zunächst durch das Abfahren mehrerer Pulszyklen, beispielsweise über eine Dauer von 30 Sekunden, zum einen das Zitzengummi konvektiv über den Innenraum gekühlt. Zum anderen bewirkt das Durchlaufen von einigen Pulszyklen ein Durchwalgen des Zitzengummimaterials. Das Zitzengummi gewinnt auf diese Weise die beim Melken tatsächlich anzunehmenden elastischen Eigenschaften. Nach diesem ersten Schritt wird temperiertes Fluid z.B. eine Reinigungs- und/oder Desinfektionslösung in den Innenraum eingeleitet. Durch dieses Mittel wird das vorher gekühlte Zitzengummi üblicherweise erwärmt. Nach einer hinreichenden Zeitspanne zur Durchwärmung des Zitzengummis erfolgt dann die Überprüfung des Verhaltens.

Gemäß einer weiteren bevorzugten Ausgestaltung des vorliegenden Verfahrens wird ein langanhaltendes Fehlverhalten des Zitzengummis dadurch unterbunden, dass im Falle eines automatischen Melkens, bei dem das Melkzeug automatisch an den Euter des zu melkenden Tieres angelegt wird, das Zitzengummiverhalten automatisch überprüft wird. Diese bevorzugte Weiterbildung ist insbesondere für das mannlose Melken von Bedeutung.

Das erfindungsgemäße Verfahren bietet die Möglichkeit, Fehlfunktionen beim Pulsator aber auch Ermüdungserscheinungen bzw. einen Verschleiß der Zitzengummi beim Reinigen bzw. Desinfizieren des Melkbechers vor jedem Anlegen des Melkbechers an ein zu melkendes Tier zu ermitteln und das Überschreiten von gesetzten Grenzwerten zu erkennen. Die ermittelten Messwerte werden vorzugsweise elektronisch weiterverarbeitet und an zentraler Stelle ausgewertet. Ein Vergleich von älteren Messwerten zu einem Messbecher mit neueren Messwerten erlaubt ein frühzeitiges Erkennen von aufkommenden Fehlfunktionen.

Weitere Einzelheiten, Vorteile und Merkmale der vorliegenden Erfindung ergeben sich aus der nachfolgenden Beschreibung von Ausführungsbeispielen in Verbindung mit der Zeichnung. In dieser zeigen:
- Figur 1: Einen Melkbecher mit einem ersten Ausführungsbeispiel einer Einrichtung zur Überprüfung der Zitzengummibewegung;
- Figur 2: Einen Melkbecher mit einem zweiten Ausführungsbeispiel einer Einrichtung zur Überprüfung der Zitzengummibewegung; und
- Figur 3: Einen Melkbecher mit einer als Sonde ausgebildeten Einrichtung zur unmittelbaren Überprüfung der Zitzengummibewegung.

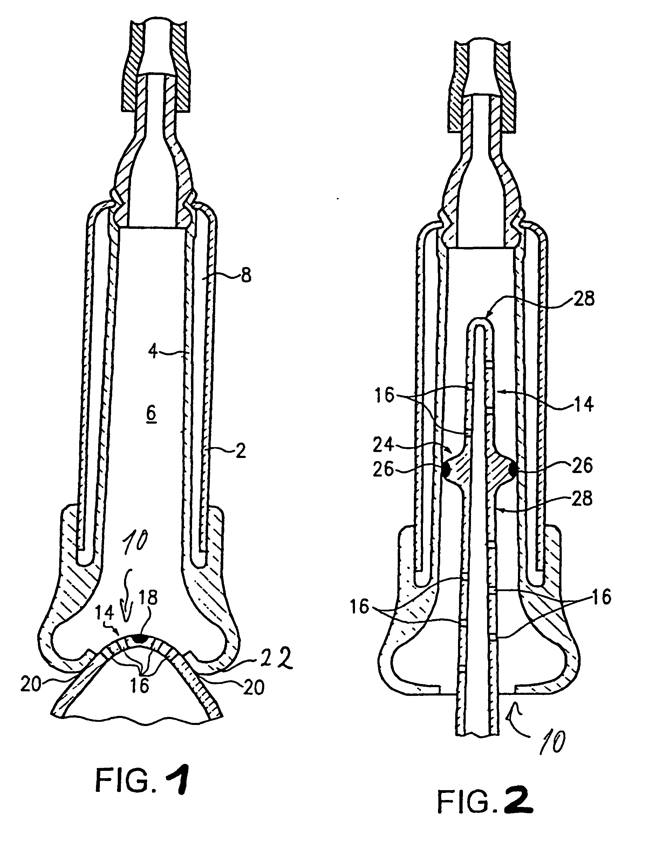

In den Figuren 1-3 ist eine Längsschnittansicht durch einen Melkbecher mit unterschiedlichen Ausführungsbeispielen von Einrichtungen zur unmittelbaren Überprüfung der Zitzengummibewegung gezeigt. Die gezeigten Melkbecher sind jeweils identisch ausgebildet und weisen ein äußeres Gehäuse 2 und ein Zitzengummi 4 auf. Das Zitzengummi 4 umgibt einen Innenraum 6 und bildet eine Öffnung 10 aus, in die eine hier nicht dargestellte Zitze eines zu melkenden Tieres einführbar ist. Zwischen dem äußeren Gehäuse 2 und dem Zitzengummi 4 befindet sich ein Pulsraum 8, der mit einer Quelle für Unterdruck verbunden ist. Hierzu sind regelmäßig Leitungen vorgesehen, die unter Zwischenschaltung von Steuerventilen den Pulsraum 8 mit der Unterdruckquelle verbinden.

Das Zitzengummi 4 ist aus einem elastischen Material gebildet und gleicht Änderungen der Druckdifferenz zwischen dem Pulsraum 8 und dem Innenraum 6 durch Bewegung aus. In Figur 1 ist das Zitzengummi 4 in einer Lage gezeigt, die das Zitzengummi 4 in etwa in der Saugphase einnimmt. In der Entlastungsphase nähern sich die Wandungen des Zitzengummis einander an.

Bei dem in Figur 1 gezeigten Ausführungsbeispiel weist die Einrichtung zur unmittelbaren Überprüfung der Zitzengummibewegung einen Dorn 14 auf, welcher mehrere Spülmitteldurchlässe 16 zum Ein- und Ausbringen von Reinigungs- und/oder Desinfektionsflüssigkeit hat. An der Spitze des Dornes 14 ist ein Druckmesssensor 18 vorgesehen. Der Dorn weist weiterhin Dichtflächen 20 auf, gegen welche ein oberer Dichtrand 22 des Zitzengummis 4 dichtend anliegt.

Mit dem in Figur 1 gezeigten Ausführungsbeispiel wird die Bewegung des Zitzengummis wie folgt direkt geprüft: Zunächst wird durch die Spülflüssigkeitsöffnungen 16 der Innenraum 6 mit Spülflüssigkeit geflutet. Dadurch ist es möglich, einerseits sowohl das Zitzengummi hinsichtlich der Funktion zu überprüfen als auch den Innenraum und die sich daran anschließenden Leitungen für Milch zu reinigen. Die durch die Öffnungen 16 in den Innenraum eingebrachte Flüssigkeitssäule erzeugt an dem Sensor 18 ein Drucksignal. Wird nun die Druckdifferenz zwischen dem Pulsraum 8 und dem Innenraum 6 in der Saug- und/oder Entlastungsphase verändert, so ergibt sich eine Veränderung des durch den Sensor 18 erfassten Drucksignals. Anhand der Höhe und des Verlaufes des Drucksignals kann auf das Zitzengummiverhalten geschlossen werden. Bei diesem Verfahren kann die Volumenänderung im Innenraum durch Wandern der Reinigungsflüssigkeit nach oben in die Milchleitung kompensiert werden. Über die Milchleitung kann ferner ein definierter Druck in dem Innenraum erzeugt werden.

In Figur 2 ist ein weiteres Ausführungsbeispiel einer Einrichtung zur unmittelbaren Überprüfung der Zitzengummieigenschaften gezeigt, welches durch einen Dorn 14 mit einer Vielzahl von Reinigungsauslässen 16 gebildet ist. Der Dorn weist eine Verdickung 24 auf, die in der Draufsicht vorzugsweise sternförmig mit abgerundeten Ecken ausgebildet ist. Zwischen benachbarten Stegen der Verdickung 24 sind daher in Umfangrichtung verteilt Durchlässe vorgesehen, so dass der oberhalb der Verdickung liegende Teil des Innenraumes 6 mit dem darunter liegenden Teil kommunizieren kann. An der äußeren Umfangsfläche der Verdickung sind vorzugsweise mehrere Kontaktsensoren 26 vorgesehen, welche zumindest in der Entlastungsphase gegen das Zitzengummi anliegen. Oberhalb und/oder unterhalb der Verdickung 24 kann der Dorn 14 weitere Sensoren 28 zur Ermittlung des Innendruckes in dem Innenraum 6 aufweisen.

Der in Figur 2 gezeigte Dorn wird vorzugsweise eingeführt, wenn bereits Reinigungsflüssigkeit durch die Auslässe 16 gefördert wird. Dadurch erfolgt bereits beim Einbringen' des Dornes 14 in den Innenraum 6 eine Reinigung und gegebenenfalls Desinfektion der Innenwandung des Zitzengummis 4. Bei in den Innenraum 6 eingeschobenem Dorn 14 wird schließlich die Druckdifferenz zwischen dem Innenraum 6 und dem Pulsraum 8 verändert. Hierdurch verändert sich auch der Druck, mit welchem das Zitzengummi 4 gegen die Sensoren 26 anliegt. Entsprechend verändert sich das Messsignal der Drucksensoren 26, welches ein Maß für die Bewegung des Zitzengummis 4 darstellt. Auch während der Überprüfung der Zitzengummibewegung kann Spül- und/oder Desinfektionsflüssigkeit durch die Auslässe 16 in den Innenraum eingebracht werden. Diese Flüssigkeit fließt beim Messen aus dem nach unten offenen Innenraum 6 heraus.

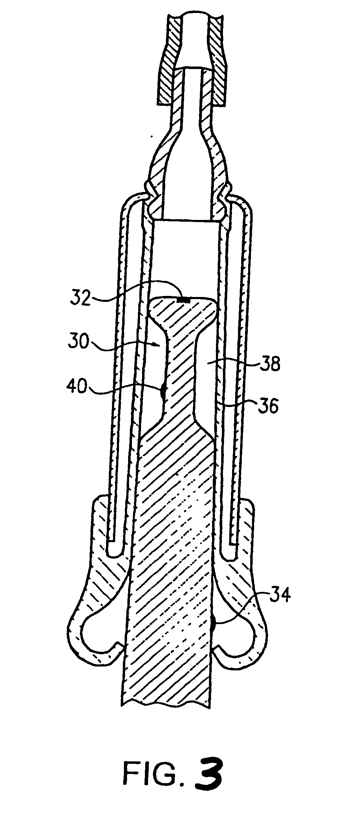

In Figur 3 ist eine Sonde 30 als weiteres Ausführungsbeispiel für eine Einrichtung zur unmittelbaren Überprüfung der Zitzengummibewegung gezeigt. Diese Sonde 30 hat eine die Größe und Form einer üblichen Zitze nachbildende Geometrie. An der vorderen Stirnseite der Sonde 30 ist ein Druckmesssensor 32 vorgesehen. Ein weiterer Druckmesssendor 34 befindet sich an derjenigen Stelle, die kurz hinter der Einlassöffnung in den Innenraum 6 liegt. Der überwiegende Teil der an dem Zitzengummi 4 anliegenden Umfangsfläche des Dornes 30 ist von einer Membran 36 gebildet, die eine in der Sonde 30 gebildete Messkammer 38 abdeckt. In der Messkammer 38 ist ein Fluid enthalten. Die Messkammer weist ferner einen Messkammersensor 40 auf.

Bei einer Veränderung der Druckdifferenz zwischen dem Innenraum 6 und dem Pulsraum 8 ergibt sich auch in der Messkammer 38 unmittelbar eine Änderung des Druckes. Die Membran folgt nicht nur der Bewegung des Zitzengummis 4 beim Kolabieren sondern auch beim Expandieren, d.h. der Bewegung in der Saugphase. Die Bewegung der Membran 36 wird durch die Kompressibilität des in der Messkammer 38 enthaltenen Fluids beschränkt. Das Fluid kann ein Gas sein. Alternativ kann die Messkammer 38 auch mit einem nach oben offenen, außerhalb der Sonde 30 angeordneten Steigrohr kommunizieren. Der Pegel dieses Steigrohres gibt die Bewegung des Zitzengummis 4 wieder.

Alternativ kann auch ein Durchflussmesser in einer Leitung vorgesehen sein, welche die Druckmesskammer 38 mit dem Steigrohr verbindet. In diesem Fall gibt das Signal des Durchflussmessers die unmittelbare Bewegung des Zitzengummis an.

Bei sämtlichen der vorstehend beschriebenen Ausführungsbeispielen kann zusätzlich ein die Temperatur in dem Innenraum 6 ermittelnder Temperaturmessfühler vorgesehen sein. Hierdurch können Veränderungen beim Verhalten des Zitzengummis gegenüber einem Referenzwert, die ausschließlich temperaturbedingt sind, bei der Ermittlung des tatsächlichen Zustandes des Zitzengummis herausgerechnet werden.

## Patentansprüche

1. Melkvorrichtung mit mindestens einem Melkbecher, der einen Innenraum (6) zur Aufnahme der Zitze eines zu melkenden Tieres durch eine Öffnung (10) des Melkbechers sowie einen von dem Innenraum (6) durch ein Zitzengummi (4) getrennten Pulsraum (8) aufweist, der mit einer Unterdruckquelle verbindbar ist,
**gekennzeichnet durch**
eine Reinigungs- und/oder Desinfektionseinrichtung mit wenigstens einem Dorn (14), der wenigstens eine **durch** die Öffnung (10) an den Innenraum (6) anschließbare Auslassöffnung (16) für Fluid aufweist sowie eine dem Dorn (14) zugeordnete Einrichtung (12, 14, 30) zum Überprüfen des Zitzengummiverhaltens.

2. Melkvorrichtung nach Anspruch 1, **dadurch gekennzeichnet, dass** der Dorn (14) eine Dichtfläche (20) zur dichtenden Anlage gegen das Zitzengummi (4) aufweist.

3. Melkvorrichtung nach Anspruch 1 oder 2, **gekennzeichnet durch** zumindest einen Druckmessfühler (38, 28, 32), mit dem der in dem Innenraum (6) wirkende absolute Druck messbar ist.

4. Melkvorrichtung nach einem der vorherigen Ansprüche, **dadurch gekennzeichnet, dass** der Druckmessfühler derart ausgebildet ist, dass er die Druckänderung eines in dem Innenraum enthaltenen Fluides erfasst.

5. Melkvorrichtung nach einem der vorherigen Ansprüche, **dadurch gekennzeichnet, dass** der Druckmessfühler (18) bei an dem Innenraum (6) angeschlossenen Dorn (14) berührungsfrei zu den Zitzengummi (4) angeordnet ist.

6. Melkvorrichtung nach einem der vorherigen Ansprüche, **gekennzeichnet durch** eine die Zitzengeometrie nachbildende Druckmesssonde (30), die einen auf die äußere Umfangsfläche der Druckmesssonde (30) wirkenden, **durch** das Zitzengummi (4) aufgebrachten Kontaktdruck erfasst.

7. Melkvorrichtung nach einem der vorherigen Ansprüche, **dadurch gekennzeichnet, dass** der Druckmesssensor (26) als Berührungssensor an einer von der Wandung des Zitzengummis (4) beaufschlagten äußeren Umfangsfläche der Einrichtung zum unmittelbaren Überprüfen der Zitzengummibewegung angeordnet ist.

8. Melkvorrichtung nach einem der vorherigen Ansprüche, **dadurch gekennzeichnet, dass** an einer unmittelbar von dem Zitzengummi (4) beaufschlagten Umfangsfläche der Einrichtung zur unmittelbaren Überprüfung des Zitzengummiverhaltens eine Membran angeordnet ist die eine mit einem Fluid gefüllte Druckmesskammer (38) abdeckt und dass der Drucksensor (40) mit der Druckmesskammer (38) kommuniziert.

9. Melkvorrichtung nach einem der vorherigen Ansprüche, **dadurch gekennzeichnet, dass** die Einrichtung zur unmittelbaren Überprüfung des Zitzengummiverhaltens mindestens einen Temperaturmessfühler umfasst.

10. Verfahren zum Melken eines milchgebenden Tieres mit einer Vorrichtung nach einem der vorherigen Ansprüche, **dadurch gekennzeichnet, dass** das Verhalten des Zitzengummis bei einem zwischen dem Pulsraum und dem Innenraum wirkenden Druckdifferenzprofil während einer Reinigungs- und/oder Desinfektionsphase ermittelt wird.

11. Verfahren nach Anspruch 10, **dadurch gekennzeichnet, dass** der in dem Innenraum wirksame absolute Druck gemessen wird.

12. Verfahren nach Anspruch 10 oder 11, **dadurch gekennzeichnet, dass** das Druckdif ferenzprofil in Übereinstimmung mit dem beim Melken wirkenden Druckdifferenzprofil eingestellt wird.

13. Verfahren nach einem der Ansprüche 10 bis 12, **dadurch gekennzeichnet, dass** die Zitzengummis mehrerer, vorzugsweise der in einem Melkzeug zusammengefassten Melkbecher zeitgleich überprüft werden und dass beim Fehlverhalten mehrerer Zitzengummi ein, einen Melkanlagenfehler anzeigendes Signal erzeugt wird.

14. Verfahren nach einem der Ansprüche 10 bis 13, **dadurch gekennzeichnet, dass** ein in dem Pulsraum und/oder ein in dem Innenraum wirkender Druck durch an dem Melkbecher angeordnete Drucksensoren gemessen wird.

15. Verfahren nach einem der Ansprüche 10 bis 14, **dadurch gekennzeichnet, dass** das Verhalten des Zitzengummis repräsentierende Daten an eine Auswerteeinrichtung weitergeleitet und mit Referenzdaten verglichen werden, welche einen Solizustand des Zitzengummis wiedergeben.

16. Verfahren nach einem der Ansprüche 10 bis 15, **dadurch gekennzeichnet, dass** das Verhalten des Zitzengummis repräsentierende Daten an einem Melkplatzterminal angezeigt werden.

17. Verfahren nach Anspruch 16, **dadurch gekennzeichnet, dass** an dem Melkplatzterminal ein von der Auswerteeinrichtung ausgelöstes Signal ausgegeben wird, sofem die das Verhalten des Zitzengummis repräsentierenden Daten außerhalb eines vorgegebenen Toleranzintervalls liegen.

18. Verfahren nach einem der Ansprüche 10 bis 17, **dadurch gekennzeichnet, dass** das Zitzengummi temperiert wird.

19. Verfahren nach Anspruch 18, **dadurch gekennzeichnet, dass** ein temperiertes Reinigungs- und/oder Desinfektionsfluid in den Innenraum eingeleitet wird.

20. Verfahren nach einem der Ansprüche 10 bis 19, **dadurch gekennzeichnet, dass** zunächst über eine vorbestimmte Zeit mehrere Pulszyklen durchlaufen werden, danach das temperierte Fluid in den Innenraum eingeleitet wird und schließlich das Verhalten des Zitzengummis überprüft wird.

21. Verfahren nach einem der vorherigen Ansprüche, bei denen das Melkzeug automatisch an den Euter des milchgebenden Tieres angelegt wird, **dadurch gekennzeichnet, dass** das Melkzeug nach jedem Melken eines einzelnen Tieres automatisch gereinigt und das Zitzengummiverhalten automatisch überprüft wird.

## Claims

1. Milking device with at least one teat cup, which comprises an internal cavity (6) for the accommodation of the teat of an animal to be milked through an opening (10) in the teat cup and a pulse cavity (8), which is separated from the internal cavity (6) by a teat rubber (4) and which can be connected to a source of negative pressure,
**characterized in that**
a cleaning and / or disinfecting device with at least one mandrel (14), which comprises at least one outlet (16) for fluid which can be connected through the opening (10) to the internal cavity (6) as well as a device (12, 14, 30), assigned to the mandrel (14), for checking the behavior of the teat rubber.

2. Milking device according to claim 1, **characterized in that** the mandrel (14) comprises a sealing surface (20) which contacts the teat rubber (4) for sealing.

3. Milking device according to claim 1 or 2, **characterized by** at least one pressure measurement probe (38, 28, 32), with which the absolute pressure prevailing in the internal cavity (6) can be measured.

4. Milking device according to one of the previous claims, **characterized in that** the pressure measurement probe is formed such that the pressure change of a fluid contained in the internal cavity can be acquired.

5. Milking device according to one of the previous claims, **characterized in that** the pressure measurement probe (18) is arranged on the mandrel (14) connected to the internal cavity (6) without mechanical contact with the teat rubber (4).

6. Milking device according to one of the previous claims, **characterized by** a pressure measurement probe (30) which replicates the teat geometry and which acquires a contact pressure acting on the outer circumferential surface of the pressure measurement probe (30) and applied by the teat rubber (4).

7. Milking device according to one of the previous claims, **characterized in that** the pressure measurement probe (26) is arranged as a tactile sensor on an outer circumferential surface of the device, subject to the action by the wall of the teat rubber (4), for the direct checking of the teat rubber movement.

8. Milking device according to one of the previous claims, **characterized in that** a membrane is arranged on a circumferential surface of the device for the direct checking of the teat rubber behavior, said surface being subject to the action of the teat rubber (4), the said membrane covering a pressure measurement chamber (38) filled with a fluid and that the pressure sensor (40) communicates with the pressure measurement chamber (38).

9. Milking device according to one of the previous claims, **characterized in that** the device for the direct checking of the teat rubber behavior includes at least one temperature measurement probe.

10. Method for milking a dairy animal with a device according to one of the previous claims, **characterized in that** the behavior of the teat rubber is acquired with a pressure difference profile acting between the pulse cavity and the internal cavity during a cleaning and / or disinfecting phase.

11. Method according to claim 10, **characterized in that** the absolute pressure prevailing in the internal cavity is measured.

12. Method according to claim 10 or 11, **characterized in that** the pressure difference profile is set in accordance with the pressure difference profile prevailing during milking.

13. Method according to one of the claims 10 to 12, **characterized in that** the teat rubbers of many teat cups, preferably combined in a milking device, are checked simultaneously and that, with the faulty behavior of several teat rubbers, a signal is produced to indicate a milking system fault.

14. Method according to one of the claims 10 to 13, **characterized in that** a pressure prevailing in the pulse cavity and / or in the internal cavity is measured by pressure sensors arranged on the teat cup.

15. Method according to one of the claims 10 to 14, **characterized in that** the data representing the behavior of the teat rubber is passed to an evaluation device and is compared with reference data which reproduces a set-point state of the teat rubber.

16. Method according to one of the claims 10 to 15, **characterized in that** the data representing the behavior of the teat rubber is displayed at a milking station terminal.

17. Method according to claim 16, **characterized in that** a signal, triggered by the evaluation device, is output at the milking station terminal when the data representing the behavior of the teat rubber lies outside of a predetermined tolerance interval.

18. Method according to one of the claims 10 to 17, **characterized in that** the teat rubber is tempered.

19. Method according to claim 18, **characterized in that** a tempered cleaning and /or disinfecting fluid is introduced into the internal cavity.

20. Method according to one of the claims 10 to 19, **characterized in that** first a number of pulse cycles are run over a predetermined time, then the tempered fluid is introduced into the internal cavity and finally the behavior of the teat rubber is checked.

21. Method according to one of the previous claims, in which the milking device is automatically applied to the udder of the animal to be milked, **characterized in that** the milking device is automatically cleaned after each milking of a single animal and the teat rubber behavior is automatically checked.

## Revendications

1. Dispositif trayeur comprenant au moins un gobelet trayeur qui présente un espace intérieur (6) destiné à recevoir grâce à une ouverture (10) dudit gobelet trayeur le trayon d'un animal à traire, et un espace de pulsation (8) qui est séparé de l'espace intérieur (6) par un manchon trayeur (4) et qui est apte à être relié à une source de dépression,
**caractérisé par** un dispositif de nettoyage et/ou de désinfection avec au moins une broche (14) présentant au moins une ouverture de sortie (16) pour un fluide qui est apte à être raccordée à l'espace intérieur (6) grâce à l'ouverture (10), et avec un dispositif (12, 14, 30) associé à la broche (14) pour contrôler le comportement du manchon trayeur.

2. Dispositif trayeur selon la revendication 1, **caractérisé en ce que** la broche (14) présente une surface d'étanchéité (20) pour l'application étanche contre le manchon trayeur (4).

3. Dispositif trayeur selon la revendication 1 ou 2, **caractérisé par** au moins un manomètre (38, 28, 32) à l'aide duquel la pression absolue qui agit dans l'espace intérieur (6) peut être mesurée.

4. Dispositif trayeur selon l'une des revendications précédentes, **caractérisé en ce que** le manomètre est conçu de manière à détecter la variation de pression d'un fluide contenu dans l'espace inférieur.

5. Dispositif trayeur selon l'une des revendications précédentes, **caractérisé en ce que** le manomètre (18) est disposé sur la broche (14) raccordée à l'espace intérieur (6), sans contact avec le manchon (4).

6. Dispositif trayeur selon l'une des revendications précédentes, **caractérisé par** une sonde de mesure de pression (30) qui simule la géométrie du trayon et qui détecte une pression de contact appliquée par le manchon trayeur (4) et agissant sur la surface périphérique extérieure de ladite sonde (30).

7. Dispositif trayeur selon l'une des revendications précédentes, **caractérisé en ce que** le manomètre (26) est disposé sous la forme d'un capteur à contact sur une surface périphérique extérieure, sollicitée par la paroi du manchon trayeur (4), du dispositif pour contrôler directement le mouvement du manchon trayeur.

8. Dispositif trayeur selon l'une des revendications précédentes, **caractérisé en ce qu'**il est prévu sur une surface périphérique, sollicitée directement par le manchon trayeur (4), du dispositif pour contrôler directement le comportement du manchon trayeur une membrane qui couvre une chambre manométrique (38) remplie d'un fluide, et **en ce que** le capteur de pression (40) communique avec la chambre manométrique (38).

9. Dispositif trayeur selon l'une des revendications précédentes, **caractérisé en ce que** le dispositif pour contrôler directement le comportement du manchon trayeur comprend au moins une sonde de température.

10. Procédé pour traire un animal laitier à l'aide d'un dispositif selon l'une des revendications précédentes, **caractérisé en ce que** le comportement du manchon trayeur est déterminé pendant une phase de nettoyage et/ou de désinfection en présence d'un profil de différence de pression agissant entre l'espace de pulsation et l'espace intérieur.

11. Procédé selon la revendication 10, **caractérisé en ce que** la preccicn absolue active dans l'espace intérieur est mesurée.

12. Procédé selon la revendication 10 ou 11, **caractérisé en ce que** le profil de différence de pression est réglé en accord avec le profil de différence de pression agissant lors de la traite.

13. Procédé selon l'une des revendications 10 à 12, **caractérisé en ce que** les manchons trayeurs de plusieurs gobelets trayeurs de préférence réunis dans un pot trayeur sont contrôlés simultanément et **en ce que** dans le cas d'un comportement anormal de plusieurs manchons trayeurs, un signal indiquant une défaillance de l'installation de traite est généré.

14. Procédé selon l'une des revendications 10 à 13, **caractérisé en ce qu'**une pression agissant dans l'espace de pulsation et/ou dans l'espace intérieur est mesurée par des capteurs de pression qui sont disposés sur le gobelet trayeur.

15. Procédé selon l'une des revendications 10 à 14, **caractérisé en ce que** des données représentant le comportement des manchons trayeurs sont transmises à un dispositif d'évaluation et sont comparées à des données de référence qui représentent un état théorique des manchons trayeurs.

16. Procédé selon l'une des revendications 10 à 15, **caractérisé en ce que** des données qui représentent le comportement du manchon trayeur sont affichées sur un terminal de station de traite.

17. Procédé selon la revendication 16, **caractérisé en ce qu'**un signal déclenché par le dispositif d'évaluation est émis au niveau du terminal de station de traite dans la mesure où les données qui représentent le comportement du manchon trayeur sont situées en dehors d'un intervalle de tolérance prédéfini.

18. Procédé selon l'une des revendications 10 à 17, **caractérisé en ce que** le manchon trayeur est soumis à un équilibrage de température.

19. Procédé selon la revendication 18, **caractérisé en ce qu'**un fluide de nettoyage et/ou de désinfection tempéré est introduit dans l'espace intérieur.

20. Procédé selon l'une des revendications 10 à 19, **caractérisé en ce que** plusieurs cycles de pulsation sont tout d'abord effectués pendant une durée prédéfinie, puis le fluide tempéré est introduit dans l'espace intérieur et enfin le comportement du manchon trayeur est contrôlé.

21. Procédé selon l'une des revendications précédentes, selon lequel le pot trayeur est appliqué automatiquement sur la mamelle de l'animal laitier, **caractérisé en ce que** le pot trayeur est nettoyé automatiquement après la traite de chaque animal et le comportement du manchon trayeur est contrôlé automatiquement.
